# EUROPEAN PATENT APPLICATION

(11) **EP 1 411 686 A2**
(43) Date of publication of application: **21.04.2004**
(21) Application number: 03023599.8
(22) Date of filing: 16.10.2003
(51) Int. Cl.: H04L 12/56

(54) **Wireless communication device and method capable of connectionless broadcast**

(30) Priority: 18.10.2002 KR 2002063829; 01.04.2003 KR 2003020426
(71) Applicant: SAMSUNG ELECTRONICS CO., LTD., Suwon-City, Kyungki-do (KR)
(72) Inventor: Kim, Yong-suk, Seo-gu, Daejeon-city (KR); Zhen, Bin, Paldal-gu, Suwon-city, Gyunggi-do (KR)
(74) Representative: Grünecker, Kinkeldey, Stockmair & Schwanhäusser Anwaltssozietät

(57) **Abstract**

Disclosed is a wireless communication method capable of a connectionless broadcast. The wireless communication method has the steps of generating a synchronization information for synchronizing with more than one receiver, and a broadcast data packet containing a broadcast data, broadcasting the synchronization information and synchronizing a channel with the receiver, and transmitting the broadcast data packet to the synchronized receiver. Accordingly, without a waste of time in the connection setup procedure, the broadcast data is promptly transmitted to the receiver.

## Description

### CROSS-REFERENCE TO RELATED APPLICATIONS

This application claims the priority of Korean Patent Application No. 2002-63829 filed October 18, 2002 and Korean Patent Application No. 2003-20426 filed April 1, 2003 in the Korean Intellectual Property Office, the disclosure of which is incorporated herein by reference.

### BACKGROUND

### 1. Field of the invention

The present invention relates to a wireless communication device and method capable of a connectionless broadcast, and more specifically to a wireless communication device and method capable of a connectionless broadcast in which a broadcast data is transmitted prior to a connection setup procedure in a Bluetooth system.

### 2. Description of the related art

Bluetooth is a low-priced, low-power and short-range wireless communication technology developed to remove cable connecting devices such as a mobile phone handset, a headset and a portable computer. However, as a standardized wireless communication became feasible among Bluetooth devices, Bluetooth originated a concept of a personal area network (PAN), which is a sort of short-range wireless network. Bluetooth devices are operated using 2.4GHz Industrial Scientific Medical (ISM) unlicensed band. A Bluetooth device which initiates data transaction in a Bluetooth network is called a master, and a Bluetooth device which responds to the master is called a slave. One master can be connected with seven active slaves at most, and a network configured by one master and more than one slave through a connection setup procedure is called a piconet.

Meanwhile, PAN users (PANU) which support a Bluetooth profile need to collect location information from a network access point (hereinafter, referred to as "NAP"). As the PANUs move around, the number of the PANUs covered by one NAP changes. Accordingly, the NAPs should periodically broadcast information of a second layer, i.e., data link layer and a third layer, i.e., network layer of an Open System Interconnection (OSI). According to Bluetooth specification 1.2, Bluetooth is a connection oriented system which requires much time in the connection setup prior to the data transaction, such as inquiry, inquiry scan, page and page scan. Hence, information transfer through the broadcast is feasible only after the connection setup among the Bluetooth devices of one piconet is completed.

For a handover occurring when the PANUs move from one piconet to another, the PANUs use lots of resources. For example, in case of spontaneous handover, some NAPs should perform a paging procedure for the handover with respect to only one PAN. During the paging procedure, the NAPs abort services for a long time with respect to the PANs that have already connected and received the services. This service abortion disables the support of real time services. However, it is a waste of a resource to perform the handover every time the PANUs move around, because most PANUs are in an idle state. That is, it is enough that the NAP is roughly aware of the location of the PANs in the idle state.

Bluetooth PAN Working Group or Local Positioning Working Group mentioned that much information needs to be exchanged and broadcasted before the master and the slave are determined. However, as aforementioned, in order to broadcast the information in the Bluetooth system, the piconet configured by the master and the slave has to be determined beforehand. Therefore, a device and a method to support the broadcast before the connection setup is required.

For this, Philips has proposed a solution to extend an identifier (ID) packet in order to broadcast the location information during the inquiry process. However, this solution has a drawback when the broadcast information is divided into several packets for transmission. That is, the location information contained in the extended identifier (EID) packet is 300 bytes, and an access point has to periodically broadcast an advertisement message by internet protocol (IP) layer handover protocol. There is a problem in efficiently allocating the broadcast message.

The solution of Philips has another drawback in that it takes too much time because each slot packet has to be repeated every sixteen frequency hops. In addition, as the EID packet is received, synchronizing with the NAP has to be preformed at the same time the information is received. Accordingly, if there is an error in receiving just one packet, the information contained in a packet is lost and disabled thereby requiring reassembly of the whole broadcast information.

To solve the above drawbacks, Widcomm proposed a solution to attach a Bluetooth device address (hereinafter, refer to as "BD_ADDR") of the NAP to the EID packet. According to this solution, receiving the EID packet, the PANU is able to synchronize with the NAP using BD_ADDR and clock information, which are contained in the EID packet, to thereby support the fast handover. However, according to this solution, the PANU should respond to the received EID packet for the connection setup thereby spending too much time in reaching a state in which a data transmission is feasible.

### SUMMARY

Accordingly, an aspect of the present invention is to provide a wireless communication device and method which is capable of a connectionless broadcast for broadcasting information before a connection setup procedure and performing a fast connection setup procedure if required.

To achieve the above aspect of the present invention, the wireless communication method capable of the connectionless oriented broadcast comprises (a) generating a synchronization information for synchronizing with more than one receiver, and a broadcast data packet containing a broadcast data, (b) broadcasting the synchronization information and synchronizing a channel with the receiver, and (c) transmitting the broadcast data packet to the synchronized receiver.

Preferably, the synchronization information and the broadcast data packet are respectively transmitted through a beacon window and a broadcast window. The synchronization information is transmitted by an EID packet. The EID packet contains a dedicated inquiry access code (DIAC), a Bluetooth device address and a clock information.

The EID packet further contains a setup information of the broadcast window. The broadcast window setup information contains at least one of a offset slot, a size of the broadcast window and a broadcast repetition number. Also, the broadcast data packet contains a class of the broadcast information, a packet size and a payload.

In (a) and (b), it is possible to transmit and receive data to and from the external device using a Bluetooth protocol.

A wireless communication device capable of a connectionless oriented broadcast comprises a transceiver for transmitting and receiving data to and from the external device, a synchronization information generator for generating the broadcast data packet containing the broadcast information, and a controller. The controller broadcasts the synchronization information through the transceiver, synchronizes to the external device, and then controls to transmit the broadcast data packet to the external device through the transceiver.

Preferably, the synchronization information and the broadcast data packet are respectively transmitted through a beacon window and a broadcast window. The synchronization information is transmitted by an EID packet. The EID packet contains a dedicated inquiry access code (DIAC), a Bluetooth device address and a clock information.

The EID packet further contains a setup information of the broadcast window. The broadcast window setup information contains at least one of a offset slot, a size of the broadcast window and a broadcast repetition number. Also, the broadcast data packet contains a class of the broadcast information, a packet size and a payload.

The transceiver can transmit and receive the data with the external device by using a Bluetooth protocol.

Another wireless communication method capable of a connectionless oriented broadcast comprises (a) generating a synchronization information for synchronizing with more than one receiver, and a broadcast data packet containing a broadcast data, (b) broadcasting the synchronization information and synchronizing a channel with the receiver, (c) transmitting the broadcast data packet to the synchronized receiver, and (d) executing a connection window for a connection setup with the receiver that requests to be connected.

The wireless communication method further comprises (d) executing a connection window for a connection setup with the receiver that requests to be connected. Element (d) comprises receiving a link management protocol (LMP) message from the receiver that requests to be connected, and exchanging a POLL packet with the receiver and setting up the connection.

The synchronization information and the broadcast data packet are respectively transmitted through a beacon window and a data window. The synchronization information is transmitted by a broadcast identifier (BID) packet.

The BID packet contains a BD_ADDR and a clock information. The BID packet contains at least one of a configuration of the data window, a position of the connection window and an error check. The configuration of the data window contains at least one of an Asynchronous Connectionless (ACL) packet type, a repetition number, a broadcast profile and an offset of data. The data is transmitted to and received from the receiver by using the Bluetooth protocol.

### BRIEF DESCRIPTION OF THE DRAWINGS

The above aspects, and other features and advantages of the present invention will become more apparent after a reading of the following detailed description when taken in conjunction with the drawings, in which:

FIG. 1 is a block diagram schematically showing a wireless communication device according to a first embodiment of the present invention;

FIG. 2 is diagram showing a hierarchical structure and a time information of a broadcast channel used in the first embodiment of the present invention;

FIG. 3 is a flow chart showing an operation of the wireless communication device according to the first embodiment of the present invention;

FIG. 4 is a flow chart showing a process of transmitting broadcast information between a NAP and a PANU using the wireless communication method according to the first embodiment of the present invention;

FIG. 5 is a diagram showing a wireless communication environment applying a wireless communication method capable of a connectionless broadcast according to a second embodiment of the present invention;

FIG. 6 is a diagram showing a hierarchical structure and a time information of a broadcast channel used in the second embodiment of the present invention;

FIG. 7 is a diagram showing a structure of a beacon window of FIG. 6;

FIG. 8 is a diagram showing a structure of a data window of FIG. 6;

FIG. 9 is a diagram showing a structure of a connection window of FIG. 6; and

FIGs. 10 and 11 are message sequence charts depicting the wireless communication method capable of a connectionless broadcast according to the second embodiment of the present invention.

### DETAILED DESCRIPTION OF THE EXEMPLARY EMBODIMENTS

Hereafter, the present invention is described with reference to the attached drawings.

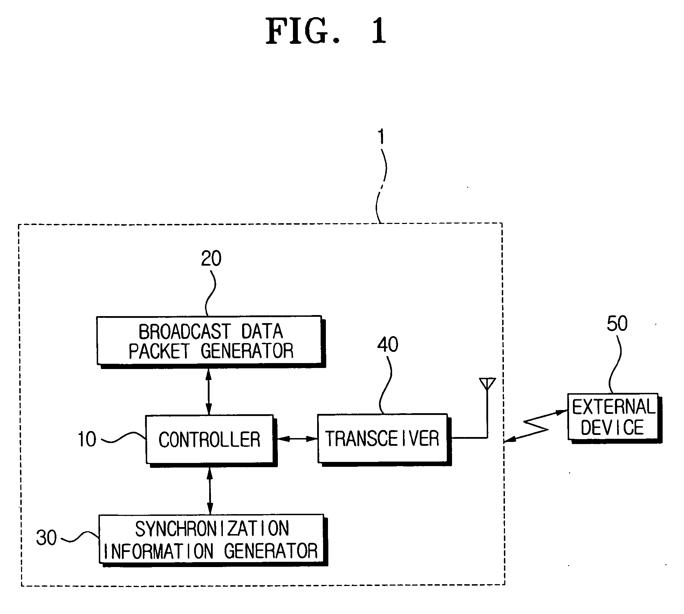

FIG. 1 is a diagram schematically showing a wireless communication device according to a first embodiment of the present invention.

The wireless communication device 1 comprises a controller 10, a broadcast data packet generator 20, a synchronization information generator 30 and a transceiver 40. The wireless communication device 1 communicates with an external device 50 using a Bluetooth protocol.

The synchronization information generator 30 generates synchronization information for channel synchronization, and the broadcast data packet generator 20 generates a broadcast data packet containing broadcast information. The transceiver 40 transmits and receives data to and from the external device 50 by the Bluetooth protocol. The controller 10 broadcasts the synchronization information generated in the synchronization information generator 30 through the transceiver 40, and controls to transmit the broadcast data packet to the external device 50 through the transceiver 40 after the transmission of the synchronization information. The external device 50 indicates the existence of a Bluetooth device capable of communicating by the Bluetooth protocol.

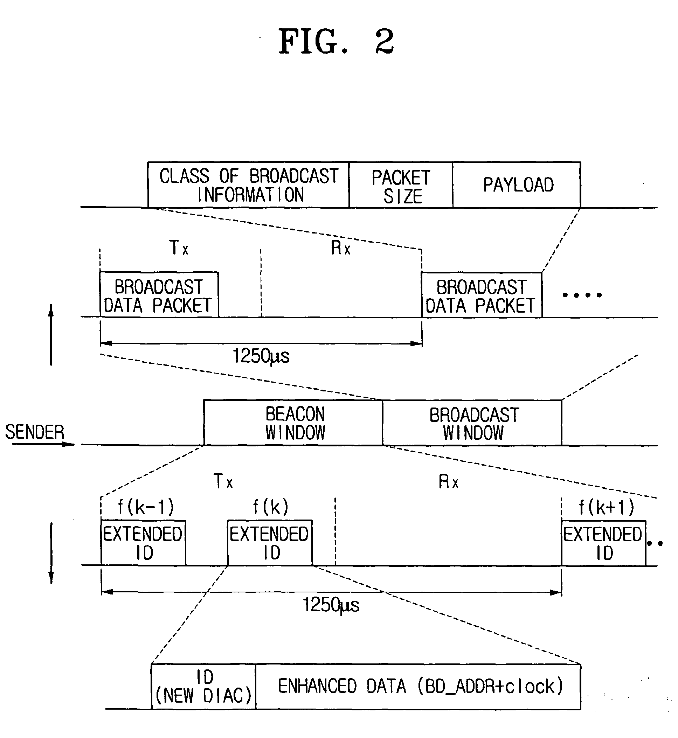

FIG. 2 shows a hierarchical structure and a time information of a broadcast channel used in the first embodiment of the present invention.

According to the first embodiment of the present invention, the wireless communication device 1 uses a connectionless broadcast channel. As shown in FIG. 2, the broadcast channel consists of a beacon window and a broadcast window. The beacon window is used for channel synchronization among the PANUs as defined in Bluetooth specification 1.2, and the broadcast window is used for transmission of the broadcast information. To receive the broadcast information, the PANU just stays in an inquiry scan state. As for the beacon window, a procedure similar to the inquiry scan state is performed. The broadcast information during the broadcast window is transmitted through the same procedure as broadcasted in a single piconet.

A synchronization process in the beacon window is performed using an EID packet which is proposed by Philips. The EID packet uses a newly defined DIAC to distinguish it from a normal ID packet. The DIAC is used to detect the existence of the packet and to transmit the packet to a specific device. The Bluetooth packet basically consists of the DIAC, a packet header and a payload.

The following [00Table 1] shows information contained in the EID packet.

**[Table 1]**

| Field | Items | Size | Comments |
|---|---|---|---|
| Service | service type | 4 bits | synchronization packet and random access request packet (2 bits reserved) |
| Synchronizati on | clock | 28 bits | |
| | BD_ADDR | 32 bits | |
| Broadcast window setup | offset slot | 12 bits | |
| | broadcast window size | 5 bits | selective |
| | broadcast repetition number | 3 bits | |
| error check | CRC | 8 bits | FEC rate 2/3 |

In the items of [00Table 1], the service type, the clock and the BD_ADDR are required items for the EID packet. However, the offset slot may be omitted if the beacon window is consecutively followed by the broadcast window. Other parameters may be selectively used as needed.

The broadcast data packet that is used in the broadcast window following the beacon window, as shown in FIG. 2, consists of the class of broadcast information, the packet size, and the payload. The class of broadcast information contains information such as a LP service, a PAN service, a Mobile Ad Hoc Network (MANET), and reserved information. The packet size stores a length of the transmitted packet as a byte. The payload is altered according to the information stored in the class of the broadcast information.

That is, the broadcast information transmitted within the broadcast window can be altered according to an application being used. For example, through the broadcast information, the location information or an alarm message used in a second layer and a third layer of an OSI can be transmitted. If there is no broadcast information to be transmitted, the broadcast window may be omitted.

The broadcast data packet is segmented into an appropriate size in Bluetooth Logical Link Control and Adaptation Protocol (L2CAP), encapsulated into an ACL data packet and transmitted through a Bluetooth baseband layer. At this time, the L2CAP provides services necessary for communication of an upper layer protocol through a Bluetooth link. The baseband performs functions such as channel encoding/decoding, low-level control of timing, and link management within a transmission range of a single data packet. The baseband also attaches an address field and a link control field to the pure payload data and provides error detection and correction functions. In the broadcast data packet, a channel access code does not have to be newly defmed, because it can be derived using a Low Address Part (LAP) of the BD_ADDR contained in the EID packet from the receiving PANU.

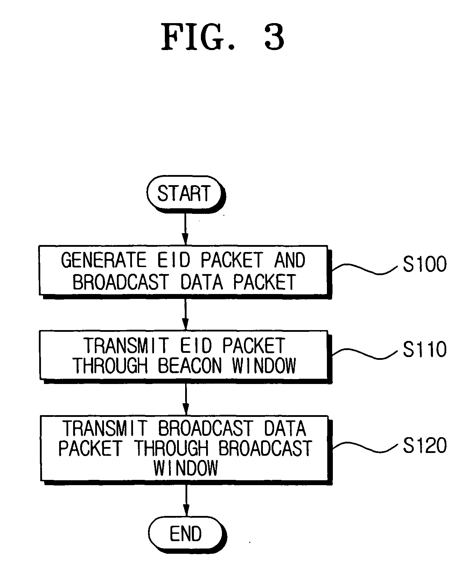

FIG. 3 is a flow chart showing an operation of the wireless communication device according to the first embodiment of the present invention.

Referring to the flow chart, the synchronization information generator 30 generates the EID packet containing the synchronization information for the channel synchronization, and the broadcast data packet generator 20 generates the broadcast data packet (S100). The controller 10 transmits the EID packet through the beacon window (S110). If the channel is synchronized with the external device 50 such as the PANU by the EID packet transmission, the controller 10 retransmits the broadcast data packet containing the broadcast information through the broadcast window (S120). During the beacon window and the broadcast window, the existing Bluetooth connection setup procedure is not necessary, since the external device 50, i.e., the PANU, need not send a response with respect to any received packet. Hence, the broadcast channel used by the wireless communication device according to the present invention becomes connectionless oriented.

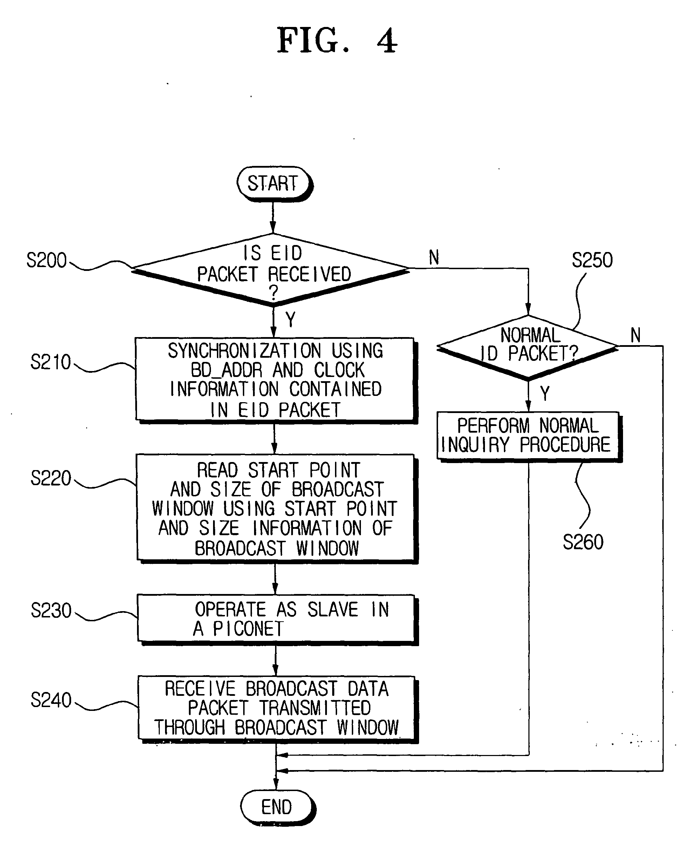

FIG. 4 is a flow chart showing a process of transmitting broadcast information between the NAP and the PANU using the wireless. communication method according to the first embodiment of the present invention.

Referring to FIG. 4, the NAP operates in an inquiry substate in the beacon window and uses an EID packet train A, B as in the inquiry procedure. While listening to one frequency hopping, if the EID packet is received, the PANU in an inquiry scan mode determines that the beacon window has begun (S200). At this time, if not the EID packet but the normal ID packet is received, the PANU recognizes it as the normal inquiry procedure and performs a suitable procedure (S250, S260).

Receiving the EID packet, the PANU is synchronized using the BD_ADDR and the clock information contained in the received EID packet (S210). Also, the PANU reads a start point and a size of the broadcast window using the offset slot and the broadcast window size that are contained in the EID packet (S220).

Once the synchronization between the NAP and the PANU is done by the EID packet transmitted from the beacon window, the PANU operates as a slave in a piconet (S230). A master is the NAP. The synchronized PANU receives the broadcast data packet transmitted through the broadcast window (S240). Through this transmission, the broadcast information is transmitted to the PANU. The NAP and the PANU, which have participated in the broadcast channel, return to their original states if the broadcast window is ended..

As the synchronized NAP and the PANU also have synchronized frequency hopping pattern, an ACL data packet can be used in order to transmit the broadcast information. In this case, one packet may be transmitted several times, or the PANU may receive and reassemble the number of segmented ACL data packets. Furthermore, the PANU may discard unrecognizable broadcast information. If the broadcast channel processes the inquiry slot and the broadcast data slot using Synchronous Connection Oriented (SCO) reverse slot, SCO services can be supported.

According to the above embodiment, the PANU need not perform the connection setup procedure. Hence, the PANU is able to receive the DIAC supporting the broadcast channel, synchronize with the relevant NAP, and then receive the broadcast information, regardless of whether the PANU is a sniff mode, a hold mode, a park mode or an active mode. By this, a single PANU can receive the information from the several NAPs and perform fast handover procedure using the received information.

In addition, since the newly defined DIAC is used for the EID packet, the normal Bluetooth device discards the relevant packet without making any response so that it does not affect the existing Bluetooth communication. If the wireless communication device according to the above embodiment has received the normal inquiry message during the beacon window, an appropriate operation for the existing Bluetooth protocol is performed so that there is no problem in communicating with the Bluetooth device complying with the existing Bluetooth protocol.

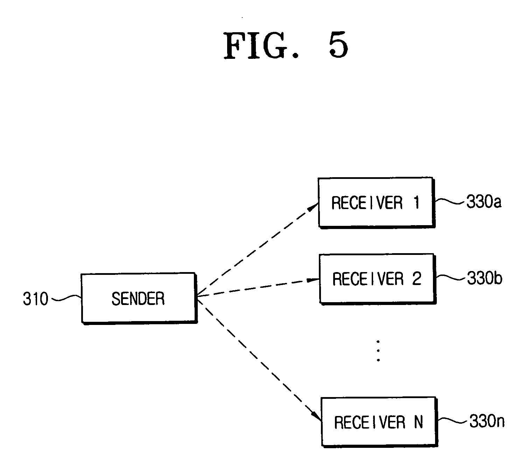

FIG. 5 is a diagram showing a wireless communication environment applying a wireless communication method capable of a connectionless broadcast according to a second embodiment of the present invention. As shown in FIG. 5, the wireless communication environment comprises a sender 310 and a plurality of receivers 330a∼330n. With this configuration, the sender 310 is able to broadcast data to the receivers 330a∼330n using the connectionless broadcast channel, and without taking normal connection setup procedures such as inquiry, inquiry scan, page and page scan.

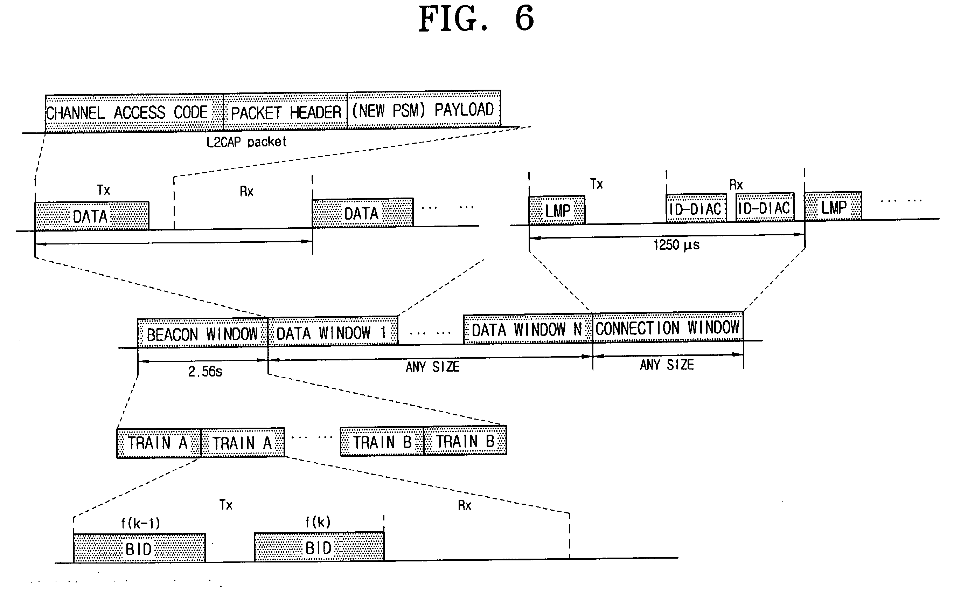

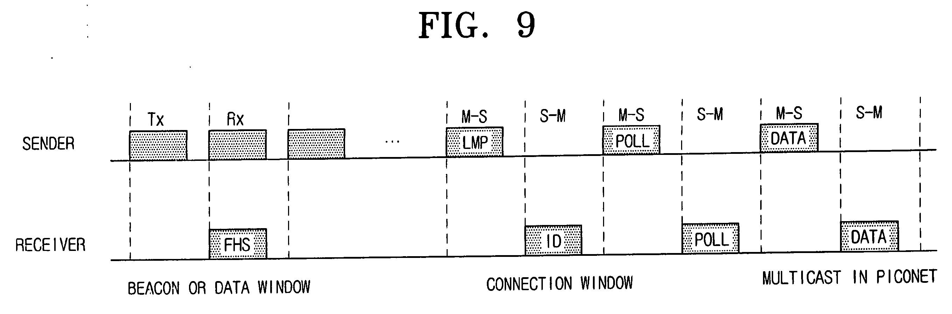

FIG. 6 is a diagram showing a hierarchical structure and a time information of the broadcast channel used in the second embodiment of the present invention. As shown in FIG. 6, the connectionless broadcast channel consists of a beacon window, a data window and a connection window. The beacon window is used for synchronization and contains an index with respect to the data window following the beacon window. The data window is used to broadcast a user-defined data from several profiles. The connection window is optional, and if the connection is required, the connection window is performed by the request of the device in order to perform the connection procedure without taking the inquiry and the scan procedure. In the beacon window and the data window, a master-slave (M-S) slot is used by the sender. In the connection window, a slave-master (S-M) slot is used by the receiver which requests the connection. See Fig. 9.

In the beacon window, BID packet trains are transmitted in the M-S slot at different frequency hops respectively. As shown in FIG. 6, the BID packet contains trains A and B. Similar to the inquiry procedure, the trains A and Blast 22.5ms and respectively process 16 frequency hops. Each packet train is repeated for 1.28s and the beacon window lasts 2.56s.

The BID packet trains in the beacon window may not be consecutive. That is, there is an occasion that the traffic packet with a higher priority such as a SCO link or an extended Synchronous Connection Oriented (eSCO) link is inserted between the BID packet trains. The BID packet is a newly defined first slot packet, containing information field up to 240 bits. The BID packet contains items such as synchronization information, configuration of data window, position of connection window, and error check. The following [Table 2] shows the information contained in the BID packet.

**[Table 2]**

| | Items | Bit size | Comments |
|---|---|---|---|
| synchronization data | BD_ADDR | 32 | required |
| | Clock | 28 | |
| Configuration of data window | ACL packet type repetition number broadcast profile | 8 | |
| | offset of data | 10 | |
| Position of connection | Offset | 8 | |
| Error check | FEC | 2/3 | |
| | CRC check | 8 | |

In Table 2, the BD_ADDR and the clock are required of the BID packet. The ACL packet type and the repetition number are used when the ACL packet type is used in the data window. The broadcast profile and the data offset indicate a broadcast data service type and its service offset. If eight bits are assigned to the broadcast profile item, up to 256 service types can be defined. When using the connection window, the offset field indicates the offset position of the connection window. The Forward Error Correction (FEC) and the Cyclic Redundancy Check (CRC) are used for an error correction.

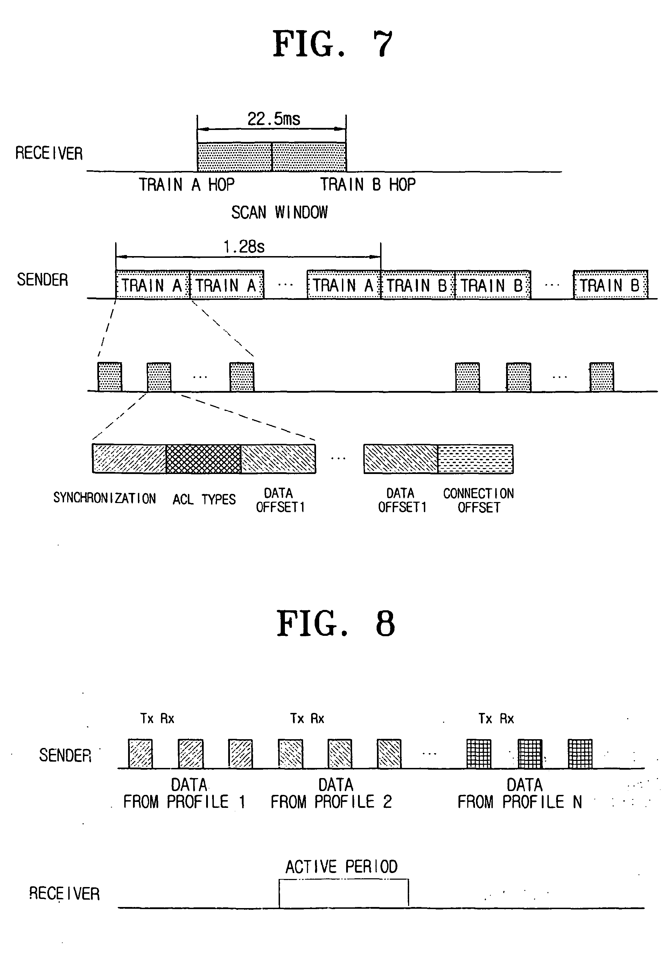

FIG. 7 is a diagram showing a structure of the beacon window of FIG. 6. As shown in FIG. 7, the available receivers open a scan window and listen at one or two frequency hops. As defined in Bluetooth specification 1.2, the size of the scan window is doubled to 22.5ms if dual scan is supported. In this case, during the first half window, the receivers listen at the frequency hops of the train A, and during the second half window, the receivers listen at the frequency hops of the train B. The maximum scan interval is 2.56s. There is no limitation for the receivers to receive, because the receivers need not transmit anything. Upon receiving the BID packet in the beacon window, the receiver picks up the BD_ADDR and the clock from the BID packet and accordingly synchronizes.

FIG. 8 is a diagram showing a structure of the data window of FIG. 6, which is segmented from different profiles. The ACL data type and the repetition number of the packet are defined in the beacon window. If there is not enough space to accommodate the broadcast data from all profiles, a neighbor connectionless broadcast channel is differently configured so as to serve different profiles. The frequency hop of the receiver is the same as in a connection state. The data is segmented or encapsulated into the L2CAP ACL packet.

If there is no connection request from the receiver, and the beacon window and the data window are ended, the procedure of the connectionless broadcast is ended. In this case, since there is no packet sending from the receiver side, the S-M slot in the beacon window and the data window can also be used to perform the normal connection procedure of devices that want to join the piconet.

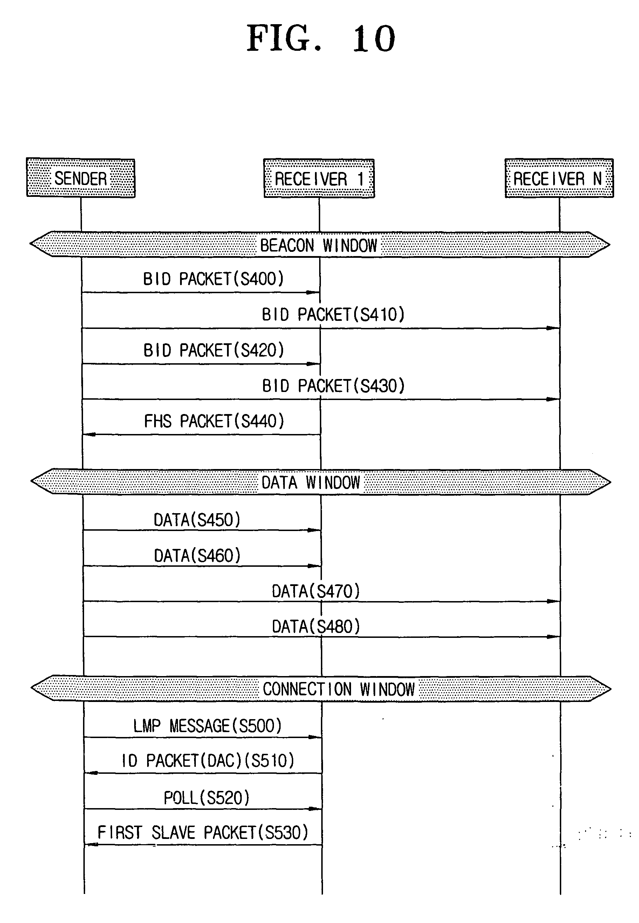

FIG. 10 is a message sequence chart (MSC) depicting the wireless communication method capable of the connectionless broadcast according to the second embodiment of the present invention.

Referring to FIG. 10, the sender, as aforementioned, generates the BID packet containing the synchronization information for the synchronization and broadcasts to each receiver through the beacon window (S400, S410). This process is repeated several times (S420, S430).

Receiving the BID packet, the receivers are synchronized by referring to the BD_ADDR and the clock information in the BID packet, and read the structure of the data window by extracting the information thereof. If the receiver wants the connection with the sender, a Frequency Hop Synchronization (FHS) packet is transmitted to the sender for the response (S440). At this time, a random number between 0 and RANDMAX is generated and the response is sent by a backoff algorithm until the beacon window and the data window are over so that message collision is avoided between the different receivers. If receiving the normal ID packet, and not the BID packet, the receiver recognizes it as the normal inquiry procedure and performs an appropriate procedure.

When the beacon window is over and the data window begins, the data packet from the different profiles is transmitted from the sender to the receivers like the broadcast in the piconet (S450, S460, S470, S480). At this time, the sender acts as the master, and the receivers act as the slaves. The data is segmented or encapsulated into the L2CAP ACL packet. A Protocol/Service Multiplexor (PSM) is used to indicate the connectionless broadcast data. During the connectionless broadcast, the response of the receiver is not necessary and the receiver just extracts the concerned data while ignoring other data. If there is no interest application or the connectionless data is received from the same sender, the receiver stays at its original state. At the same time, the S-M slot of the data window can be used for the connection request from the receiver. In this case, the receiver should make sure that the last M-S slot is used by the connectionless data packet. The receiver knows this by monitoring the PSM in the L2CAP packet.

In case of receiving the connection request from the receiver, the receiver must decide whether to start the connection window, as shown in FIG. 9. That is, when the sender wants the connection, the sender transmits a LMP message to the receiver (S500) and the connection window is started. If the sender does not want the connection due to the reasons such as insufficient resource, the LMP message is not transmitted to the receiver.

The LMP message contains the BD_ADDR and an Active Member Address (AM_ADDR). After the transmission of the LMP message, the receiver transmits the ID packet to the sender, which contains a Device Access Code (DAC) for identifying a specific device (S510). After the ID packet is transmitted from the sender to the receiver, a POLL packet is exchanged to verify the connection (S520). Then, the sender becomes the master of the piconet and the receiver becomes the slave to transmit a slave packet (S530). Accordingly, the receiver joins the piconet without having to take the inquiry or paging procedure. The connection window is ended when the first link data is transmitted from the sender to a certain slave. Hence, if more than one receiver requests the connection, the sender must establish the connection window with all the wanted connections before sending any ACL packet. After the connection window, if the receiver still requests the connection, the receiver can page the sender.

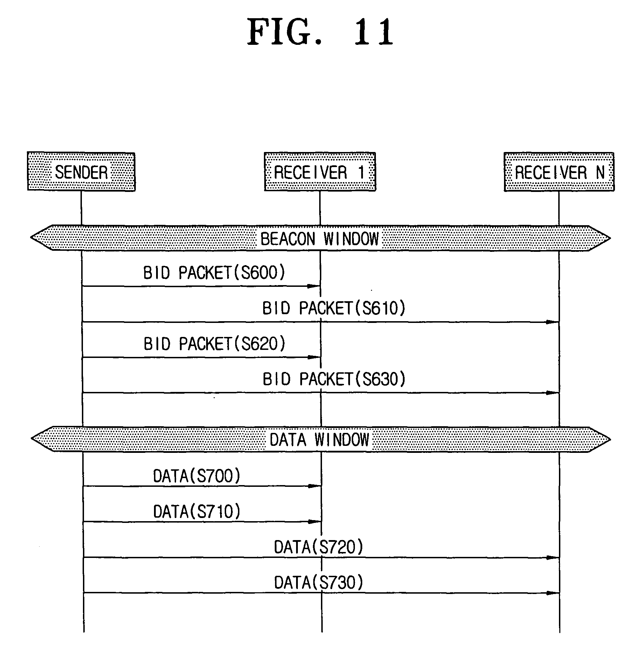

FIG. 11 is a MSC depicting the broadcasting process using just the beacon window and the data window. In this case, the process is identical with that of FIG. 6, and only differs in that the connection window is not used due to no connection request from the receiver.

According to the method aforementioned, the broadcast data can be promptly transmitted without requiring any connection setup procedure. Also, as the newly defined BID packet is used according to the present invention, the normal Bluetooth device discards the relevant packet without having to make a response so that it does not affect the existing Bluetooth communication. In addition, in the wireless communication method according to the present invention, if the normal inquiry message is received during the beacon window, an appropriate operation is performed for the existing Bluetooth protocol so that there is no problem in communication with the Bluetooth device complying with the existing Bluetooth protocol.

According to the present invention aforementioned, the broadcast channel is used consisting of the beacon window, the data window and the connection window, and the data is broadcasted without requiring any connection setup procedure. As a result, the broadcast data is promptly transmitted without a waste of time for the connection setup procedure. Also, if required, the connection is established through the connection window.

While the preferred embodiments of the present invention have been described, additional variations and modifications in that embodiment may occur to those skilled in the art once they learn of the basic inventive concepts. Therefore, it is intended that the appended claims shall be construed to include both the preferred embodiment and all such variations and modifications as fall within the spirit and scope of the invention.

## Claims

1. A wireless communication device capable of a connectionless oriented broadcast comprising:
a transceiver for transmitting and receiving data to and from an external device;
a synchronization information generator for generating a broadcast data packet containing broadcast information; and
a controller for broadcasting the synchronization information through the transceiver and synchronizing to the external device, and then controlling to transmit the broadcast data packet to the external device through the transceiver.

2. The device of claim 1, wherein the synchronization information and the broadcast data packet are respectively transmitted through a beacon window and a broadcast window.

3. The device of claim 2, wherein the synchronization information is transmitted by an extended identifier (EID) packet.

4. The device of claim 3, wherein the EID packet contains a dedicated inquiry access code (DIAC), a Bluetooth device address and clock information.

5. The device of claim 4, wherein the EID packet further contains a setup information of the broadcast window.

6. The device of claim 5, wherein the broadcast window setup information contains at least one of an offset slot, a size of the broadcast window and a broadcast repetition number.

7. The device of claim 2, wherein the broadcast data packet contains a class of the broadcast information, a packet size and a payload.

8. The device of claim 1, wherein the transceiver transmits and receives the data with the external device by using a Bluetooth protocol.

9. A wireless communication method capable of a connectionless oriented broadcast comprising:
generating synchronization information for synchronizing with an external device and a broadcast data packet containing broadcast information;
broadcasting the synchronization information and synchronizing a channel with the external device; and
transmitting the broadcast data packet to the external device.

10. The method of claim 9, wherein the synchronization information and the broadcast data packet are respectively transmitted through a beacon window and a broadcast window.

11. The method of claim 10, wherein the synchronization information is transmitted by an extended identifier (EID) packet.

12. The method of claim 11, wherein the EID packet contains a dedicated inquiry access code (DIAC), a Bluetooth device address and clock information.

13. The method of claim 12, wherein the EID packet further contains setup information of the broadcast window.

14. The method of claim 13, wherein the broadcast window setup information contains at least one of an offset slot, a size of the broadcast window and a broadcast repetition number.

15. The method of claim 10, wherein the broadcast data packet contains a class of the broadcast information, a packet size and a payload.

16. The method of claim 9, wherein, in synchronizing the channel and transmitting the broadcast data packet to the external device, the broadcast data packet is transmitted to and received from the external device by using a Bluetooth protocol.

17. A wireless communication method capable of a connectionless oriented broadcast comprising:
(a) generating synchronization information for synchronizing with more than one receiver, and a broadcast data packet containing broadcast data;
(b) broadcasting the synchronization information and synchronizing a channel with a receiver;
(c) transmitting the broadcast data packet to the synchronized receiver; and
(d) executing a connection window for a connection setup with the receiver that requests to be connected.

18. The method of claim 17, wherein the step of executing the connection window comprises:
receiving a link management protocol (LMP) message from the receiver that requests to be connected; and
exchanging a POLL packet with the receiver and setting up the connection.

19. The method of claim 17, wherein the synchronization information and the broadcast data packet are respectively transmitted through a beacon window and a data window.

20. The method of claim 19, wherein the synchronization information is transmitted by a broadcast identifier (BID) packet.

21. The method of claim 20, wherein the BID packet contains a Bluetooth device address (BD_ADDR) and clock information.

22. The method of claim 21, wherein the BID packet further contains at least one of a configuration of the data window, a position of the connection window and an error check.

23. The method of claim 22, wherein the configuration of the data window contains at least one of an Asynchronous Connectionless (ACL) packet type, a repetition number, a broadcast profile and an offset of data.

24. The method of claim 17, wherein the broadcast data packet is transmitted to and received from the receiver by using a Bluetooth protocol.
